# EUROPÄISCHE PATENTANMELDUNG

(11) **EP 0 625 790 A1**
(43) Veröffentlichungstag der Anmeldung: **23.11.1994**
(21) Anmeldenummer: 94107623.4
(22) Anmeldetag: 17.05.1994
(51) Int. Cl.: H01H 35/40

(54) **Durchfluss-Schalter**

(30) Priorität: 18.05.1993 DE 9307564 U
(71) Anmelder: HONSBERG & CO. KG, D-42897 Remscheid (DE)
(72) Erfinder: Seulen, Michael G., D-42897 Remscheid (DE)
(74) Vertreter: Finsterwald, Manfred, Dipl.-Ing., Dipl.-Wirtsch.-Ing.

(57) **Zusammenfassung**

Es wird ein Durchfluß-Schalter beschrieben, der auch bei geringen Durchflußmengen eine sichere Vorgabe eines Schaltpunktes gewährleistet und dennoch bei hohen Durchflußmengen nur geringe Druckverluste aufweist, wobei dazu der Strömungsweg durch das Gehäuse gewinkelt ausgebildet und der Kolben stirnseitig anströmbar zumindest zum Teil in einer außerhalb des Strömungswegs gelegenen Gehäuseführung verschiebbar angeordnet ist.

## Beschreibung

Die Erfindung betrifft einen Durchflußschalter, bestehend aus einem durchströmbaren, einen Zuströmkanal und einen Abströmkanal aufweisenden Gehäuse, einem im Gehäuse angeordneten, mit einem Magneten bestückten Kolben sowie zumindest einem außerhalb des Strömungsraums vorgesehenen, auf den Magneten ansprechenden Sensor zur Schaltsignalerzeugung.

Durchflußschalter dieser Art sind bekannt und dienen dazu, bei Erreichen einer vorbestimmten Durchflußmenge ein Schaltsignal zu erzeugen, beispielsweise einen Reed-Schalter zu öffnen oder zu schließen.

In bestimmten technischen Bereichen werden beim Einsatz derartiger Durchflußschalter sehr geringe Schaltpunkte bei verhältnismäßig hohen maximalen Durchflußmengen gefordert. Dies ist insbesondere der Fall im Bereich der Heizungstechnik, wo gefordert wird, daß der Durchflußschalter als Mangelsicherung bei sehr geringen Durchflußgeschwindigkeiten, d.h. bei gegen Null gehenden Durchflußgeschwindigkeiten abschalten muß.

Diese Forderung ist zwar auch mittels mechanischer Geräte grundsätzlich erfüllbar, aber es tritt dabei die Schwierigkeit auf, daß im Zusammenhang mit der Erzielung eines kleinen Schaltpunktes, d.h. bei Erzielung eines Schaltpunktes bei sehr geringen Strömungsgeschwindigkeiten, bei normaler Durchflußmenge, d.h. im normalen Betriebszustand sehr hohe Druckverluste auftreten können, die für die meisten Geräte im Heizungsbereich nicht toleriert werden können.

Ursache für diese hohen Druckverluste bei bekannten Geräten ist, daß der dort verwendete Kolben bzw. Auftriebskörper zur Sicherstellung eines Schaltpunktes bei geringen Durchflußmengen bezüglich des ihn führenden Gehäuses einen geringen Abstand besitzen muß und der so gebildete kleine Ringspalt dann bei höheren Durchflußmengen zu sehr hohen Druckverlusten führt.

Aufgabe der vorliegenden Erfindung ist es daher insbesondere, einen Durchflußschalter der eingangs angegebenen Art in der Weise auszubilden, daß zum einen ein Schaltpunkt bei geringen Durchflußmengen sicher vorgegeben bzw. gewährleistet werden kann und dennoch im Normalbetrieb, d.h. bei hohen Durchflußmengen nur geringe Druckverluste entstehen.

Diese Aufgabe wird nach der Erfindung im wesentlichen dadurch gelöst, daß der Kolben stirnseitig anströmbar zumindest zum Teil in einer außerhalb des Strömungswegs gelegenen Gehäuseführung verschiebbar angeordnet ist.

Die gewinkelte Ausbildung des Strömungsweges durch das Gehäuse und die Führung des Kolbens zumindest im wesentlichen außerhalb dieses Strömungswegs hat zur Folge, daß der den Auftriebskörper darstellende Kolben bereits bei geringer Anströmung angehoben wird und bei steigender Durchflußmenge zumindest weitestgehend aus dem Strömungsraum bewegt wird und damit der Strömungsquerschnitt freigegeben wird. Bei weitersteigender Durchflußmenge befindet sich der Kolben in einer Endposition und stört dabei die Durchströmung des Gehäuses nicht. Dies führt dazu, daß im kritischen Stadium der maximalen Durchflußmenge der Strömungsquerschnitt durch den Kolben bzw. den Auftriebskörper nicht beeinflußt wird und somit nur noch das Gehäuse selbst als Verursacher von Druckverlusten in Betracht kommt. Entsprechend gering sind dann auch die bei maximaler Durchflußmenge feststellbaren Druckverluste.

Vorzugsweise ist der Kolben in einem dem Zuströmkanal gegenüberliegenden Gehäuseabschnitt geführt, und der zusammen mit dem Zuströmkanal den Strömungsweg bildende Abströmkanal zweigt im Bewegungsbereich der Kolbenstirnfläche vom Zuströmkanal ab, und zwar vorzugsweise rechtwinkelig.

Eine sich hinsichtlich der Justage des Durchflußschalters besonders vorteilhaft auswirkende Ausführungsform der Erfindung ist in der Weise ausgebildet, daß der zur Führung des Kolbens vorgesehene Gehäuseabschnitt gleichachsig zum Zuströmkanal verläuft und endseitig ein Innengewinde zur Aufnahme eines die mit dem Kolben zusammenwirkende Feder stützenden Schraubstopfens aufweist, der bezüglich der Gehäusewand abgedichtet ist. Über diesen Schraubstopfen kann die Federvorspannung exakt und auch feinfühlig eingestellt werden. Die Veränderung der Federvorspannung führt zu einer schwächeren oder stärkeren Federkonstanten, die die Empfindlichkeit des Auftriebskörpers bzw. des Kolbens entsprechend beeinflußt. So wird bei einer weicheren Federkonstante weniger Durchfluß erforderlich sein, um den in fester Position angeordneten Sensor zum Ansprechen zu bringen, d.h. es geht damit mit einer weicheren Federkonstante der Schaltpunkt nach unten. Ein entgegengesetzter Effekt wird erzielt, wenn die Federkonstante erhöht wird. Auf diese Weise ist es möglich, alle Gerätekomponenten vorzumontieren und die Justage allein über die Veränderung der Federkonstanten vorzunehmen. Dies ermöglicht eine besondere rationelle Montage und Justage des Geräts.

Eine weitere besonders vorteilhafte Ausführungsform der Erfindung zeichnet sich dadurch aus, daß der Kolben anströmseitig als schirmförmige Blende ausgebildet ist, die mit dem den Magneten tragenden Grundkolbenteil über einen Abschnitt verringerten Durchmessers verbunden ist. Die Blende ist dabei zur Führungswandung hin bevorzugt scharfkantig ausgebildet.

Durch diese Maßnahmen wird verhindert, daß sich der Auftriebskörper zusammen mit dem Magneten im normalen Betriebszustand, d.h. bei hohem Durchfluß, in einem Totraum befindet, der nicht regelmäßig durchspült wird. In einem solchen Falle bestünde die Gefahr, daß sich der Kolben im Laufe der Zeit aufgrund des Eindringens von Fremdstoffen, Verkalkungseffekten und dergleichen in diesem Totraum festsetzt.

Durch die erfindungsgemäße Ausgestaltung des Kolbens wird zum einen erreicht, daß bezüglich der den Kolben aufnehmenden Gehäusebohrung eine sehr geringe Reibungsfläche vorliegt und zum anderen der Kolben bei Erreichen des oberen Anschlages, nicht völlig in einer Totraumbohrung verschwindet, sondern mit seinem Blendenteil im durchströmten Gehäusebereich verbleibt, so daß eine gewisse Durchströmung des Ringraums hinter der Blende erfolgt und aufgrund der dabei auftretenden Verwirbelungseffekte die Gefahr eines Schmutzansatzes im kritischen Blendenbereich verhindert wird.

Gemäß einer Weiterbildung der Erfindung ist in das Gehäuse dem Durchströmungsbereich benachbart ein Thermostat integriert, so daß in einer Einheit zwei Überwachungsfunktionen zusammengefaßt sind, was insbesondere im Heizungsbereich von Vorteil ist, da dabei neben der eigentlichen Durchflußüberwachung noch eine zusätzliche Sicherheitsbegrenzung der Temperatur gefordert wird. Diese Realisierung zweier Überwachungsfunktionen in einer Einheit führt zu einem praktisch bedeutsamen Kosten- und Montagevorteil.

Ein Ausführungsbeispiel der Erfindung wird nachfolgend unter Bezugnahme auf die Zeichnung erläutert; in dieser Zeichnung zeigt:
- Fig. 1: eine Längsschnittansicht eines Durchflußschalters nach der Erfindung bei maximalem Durchfluß,
- Fig. 2: den Durchflußschalter nach Figur 1 in der Null-Stellung, d.h. bei fehlendem Durchfluß, und
- Fig. 3: eine Längsschnittansicht einer weiteren Ausführungsform eines Durchflußschalters nach der Erfindung mit einer integrierten, zusätzlichen Überwachungsfunktion.

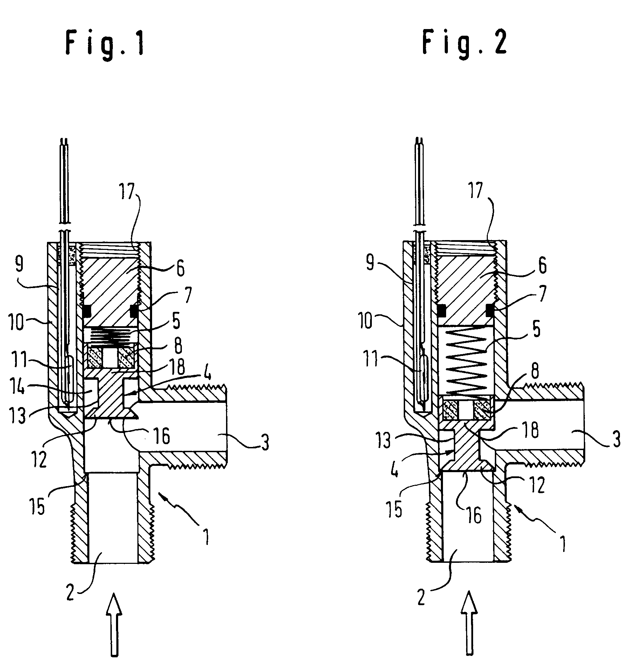

Nach Figur 1 besteht der Durchflußschalter aus einem Gehäuse 1 mit einem Zuströmkanal 2 und einem dazu rechtwinkelig verlaufenden Abströmkanal 3, wobei in der Verlängerung des Zuströmkanals 1 ein Gehäuseabschnitt 10 vorgesehen ist, der zur Führung eines Kolbens 4 dient.

Der Kolben 4 trägt einen Ringmagneten 8, der in einer entsprechenden Ausnehmung des Kolbens fest angebracht ist, und mit diesem Ringmagneten wirkt ein Reedschalter zusammen, der in einer im Gehäuseabschnitt 10 ausgebildeten Aufnahmetasche 9 außerhalb des Strömungsraums angeordnet ist. Der Schaltzustand des Reedschalters 11 hängt von der jeweiligen Position des Magneten 8 ab.

Der Kolben 4, der im Betrieb als Auftriebskörper wirkt, ist in Richtung des Zuströmkanals 1 durch eine Feder 5 vorgespannt, welche an einem Schraubstopfen 6 abgestützt ist.

Der Gehäuseabschnitt 10 ist dazu im Bereich seines freien Endes mit einem Innengewinde 17 versehen, längs dessen der Schraubstopfen 6 verstellt werden kann. Bezüglich der Gehäusewandung ist der Schraubstopfen über einen O-Ring 7 abgedichtet.

Der Kolben 4 ist in spezieller Weise ausgebildet und weist anströmseitig eine vergleichsweise schmale Blende 12 auf, deren Stirnseite von dem durch das Gehäuse geleiteten Fluid angeströmt wird.

Diese Blende 12 ist über einen Abschnitt 13 verringerten Durchmessers mit dem Grundkolbenteil 18 verbunden, wodurch zwischen der Blende 12 und dem Grundkolbenteil 18 ein Ringraum 14 entsteht. Die Blende verläuft in ihrem Randbereich zu der Führungswandung hin stark abgeschrägt, wodurch zwischen dieser Blende 12 und der zugehörigen Führungswand nur eine sehr geringe Reibung entstehen kann.

Bei dem in Figur 1 gezeigten Betriebszustand liegt eine starke Strömung durch das Gehäuse vor, die bewirkt, daß der über die Stirnfläche 16 angeströmte Kolben seine obere Endstellung einnimmt, in der die Feder 5 aufgrund der Blockstellung den Anschlag bildet.

Wesentlich ist dabei, daß der Strömungsweg für das Fluid durch das Gehäuse im wesentlichen durch den Kolben unbehindert ist, daß aber die Blende 12 sich dabei aber nicht in einem Totraum befindet, sondern der hinter der Blende 12 gelegene Ringraum 14 durchspült und damit ständig gereinigt werden kann, so daß Blockiertendenzen ausgeschaltet werden.

Bei dem in Figur 2 gezeigten Betriebszustand befindet sich der Kolben 4 in seiner unteren Endstellung, wo er an einem im Zuströmkanal 2 ausgebildeten Anschlag 15 anliegt.

Es findet somit in diesem Betriebszustand keine Strömung durch das Gehäuse statt.

Das Ansprechverhalten des Durchflußschalters kann durch die Verstellung des Schraubstopfens 6 verändert werden. Eine Veränderung der dadurch bewirkten Federvorspannung führt zu einer entsprechenden Veränderung der Federkonstante, welche die Empfindlichkeit des als Auftriebskörper wirkenden Kolbens entsprechend beeinflußt. Diese Einstellmöglichkeit der Federkonstante ermöglicht es, die Justage allein über die Schraubstopfenverstellung vorzunehmen und sicherzustellen, daß in der Funktion enge Toleranzen gewährleistet werden können. Es ist auf diese Weise auch nicht mehr nötig, ein exaktes, lagegenaues Vergießen des jeweiligen Reed-Schalters vorzunehmen, wie dies zu Justierzwecken bisher häufig erforderlich war, sondern es kann bei vergossenem Reed-Schalter die erforderliche Justage exakt und einfach durch die Schraubstopfenbetätigung erfolgen.

Der Durchflußschalter nach der Erfindung ermöglicht damit eine mechanische Durchflußmangelsicherung, bei der ein geringer Schaltpunkt mit maximaler Durchflußmenge und geringen Druckverlusten erreicht wird und eine besonders rationelle Montage und Justage des Gerätes möglich ist.

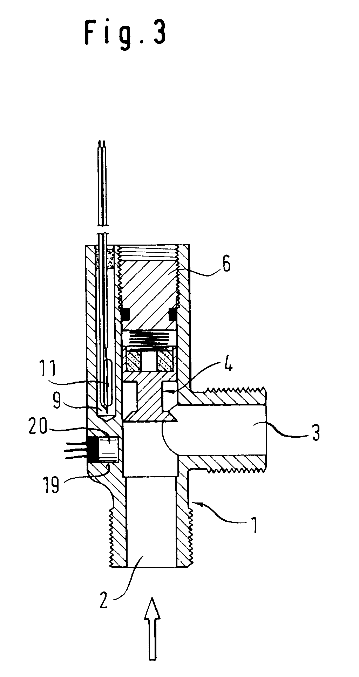

Fig. 3 zeigt einen Durchflußschalter entsprechend der bereits beschriebenen Ausführungsform, bei dem jedoch derjenige Bereich des Gehäuses 1, in dem die Aufnahmetasche 9 für den Reed-Schalter 11 vorgesehen ist, auch im Anschluß an diese Aufnahmetasche 9 noch mit etwas vergrößerter Wandungsstärke ausgebildet ist und in diesem Bereich eine Sacklochausnehmung 19 zur Aufnahme eines Thermostaten 20 angebracht ist.

Die Sacklochausnehmung 19 und die Aufnahmetasche 9 verlaufen senkrecht zueinander, liegen jedoch vorzugsweise mit ihren Achsen etwa in der gleichen Ebene.

Die Sacklochausnehmung 19 erstreckt sich bis nahe an den Durchströmungsbereich, so daß zwischen dem Durchströmungsbereich und der den Thermostaten 20 aufnehmenden Ausnehmung nur eine relativ dünne Wandung verbleibt und somit ein schnelles Ansprechverhalten des Thermostaten gewährleistet werden kann.

Die elektrischen Anschlüsse des Reed-Schalters 11 und des Thermostaten 20 sind einzeln aus dem Gehäuse geführt, so daß die Kontaktfunktionen auch völlig unabhängig voneinander in der Gesamtanlage verdrahtet werden können.

Durch die Integration des Thermostaten 20 in das Durchflußüberwachungsgerät wird eine zusätzliche Überwachungsfunktion realisiert, die unter Kosten- und Montageaspekten sehr vorteilhaft ist, eine hohe Betriebssicherheit bei Störungsunanfälligkeit gewährleistet und auch alle Anforderungen hinsichtlich der Ansprechempfindlichkeit erfüllt.

## Patentansprüche

1. Durchflußschalter, bestehend aus einem durchströmbaren, einen Zuströmkanal und einen Abströmkanal aufweisenden Gehäuse, einem im Gehäuse angeordneten, mit einem Magneten bestückten und über eine Feder gegen das Strömungsmedium abgestützten Kolben sowie zumindest einem außerhalb des Strömungsraums vorgesehenen, auf den Magneten ansprechenden Sensor zur Schaltsignalerzeugung,
dadurch **gekennzeichnet,**
daß der Strömungsweg durch das Gehäuse gewinkelt ausgebildet und der Kolben (4) stirnseitig anströmbar zumindest zum Teil in einer außerhalb des Strömungswegs gelegenen Gehäuseführung verschiebbar angeordnet ist.

2. Durchflußschalter nach Anspruch 1,
dadurch **gekennzeichnet,**
daß der Kolben (4) in einem dem Zuströmkanal gegenüberliegenden Gehäuseabschnitt (10) angeordnet und der zusammen mit dem Zuströmkanal (2) den Strömungsweg bildende Abströmkanal (3) im Bewegungsbereich der Kolbenstirnfläche (16) vom Zuströmkanal (2) abzweigt.

3. Durchflußschalter nach Anspruch 1 oder 2,
dadurch **gekennzeichnet,**
daß der Abströmkanal (3) etwa rechtwinkelig zum Zuströmkanal (2) verläuft.

4. Durchflußschalter nach einem der vorhergehenden Ansprüche,
dadurch **gekennzeichnet,**
daß der zur Führung des Kolbens (4) vorgesehene Gehauseabschnitt (10) gleichachsig zum Zuströmkanal (2) verläuft und endseitig ein Innengewinde (17) zur Aufnahme eines die mit dem Kolben (4) zusammenwirkende Feder (5) stützenden Schraubstopfens (6) aufweist.

5. Durchflußschalter nach Anspruch 4,
dadurch **gekennzeichnet,**
daß der gegenüber der Gehäusewandung abgedichtete Schraubstopfen (6) ein Organ zur Einstellung der Federvorspannung bildet.

6. Durchflußschalter nach einem der vorhergehenden Ansprüche,
dadurch **gekennzeichnet,**
daß in der Wandung des den Kolben (4) führenden Gehäuseabschnitts (10) eine vom Gehäuseinnenraum getrennte Aufnahmetasche (9) für einen Sensor, insbesondere einen Reedschalter (11) ausgebildet ist.

7. Durchflußschalter nach einem oder mehreren der vorhergehenden Ansprüche,
dadurch **gekennzeichnet,**
daß der Kolben (4) anströmseitig als schirmförmige Blende (12) ausgebildet ist, die mit dem den Magneten (8) tragenden Grundkolbenteil (18) über einen Abschnitt (13) verringerten Durchmessers verbunden ist.

8. Durchflußschalter nach Anspruch 7,
dadurch **gekennzeichnet,**
daß die Blende (12) zur Führungswandung hin scharfkantig ausgebildet ist.

9. Durchflußschalter nach einem oder mehreren der vorhergehenden Ansprüche,
dadurch **gekennzeichnet,**
daß der Kolbenhub zwischen zwei Endstellungen begrenzt ist.

10. Durchflußschalter nach einem der vorhergehenden Ansprüche,
dadurch **gekennzeichnet,**
daß die schraubstopfenseitige Endstellung des Kolbens (4) derart festgelegt ist, daß die Blende (12) in dieser Endstellung außerhalb der Kolbenführungsbohrung gelegen und der hinter der Blende (12) durch die dortige Durchmesserverringerung gebildete Ringraum (14) zum Durchströmungsbereich hin offen und vom Fluid durchspülbar ist.

11. Durchflußschalter nach einem der vorhergehenden Ansprüche,
dadurch **gekennzeichnet,**
daß im Gehäuse (1) eine sich bis nahe an den Durchströmungsbereich erstreckende Sacklochausnehmung (19) zur Aufnahme eines Temperaturfühlers (20) vorgesehen ist, wobei die Sacklochausnehmung (19) bezüglich der Aufnahmetasche (9) für den Reed-Schalter (11) zuströmseitig angeordnet ist und senkrecht zu dieser Aufnahmetasche (9) verläuft und als Temperaturfühler insbesondere ein Thermostat vorgesehen ist.
